# EUROPEAN PATENT APPLICATION

(11) **EP 2 037 101 A1**
(43) Date of publication of application: **18.03.2009**
(21) Application number: 07425567.0
(22) Date of filing: 13.09.2007
(51) Int. Cl.: F02D 9/10, F02D 11/10, F16K 1/22

(54) **Throttle valve for an internal combustion engine**

(71) Applicant: MAGNETI MARELLI POWERTRAIN S.p.A., 20011 Corbetta (IT)
(72) Inventor: Zibordi, Lisa, 40125 Bologna (IT); Musolesi, Stefano, 40122 Bologna (IT); Colli, Marcello, 42100 Reggio Emilia (IT); Bellato, Nazario, 40131 Bologna (IT); Tartari, Michele, 40131 Bologna (IT)
(74) Representative: Jorio, Paolo

(57) **Abstract**

A throttle valve (1) for an internal combustion engine presenting: a valve body (2); a tubular feeding pipe (4) of circular section defined in the valve body (2) and through which the air sucked by the internal combustion engine flows; and a throttle small plate (5), which is circular shaped, is arranged inside the feeding pipe (4) and rotates about a rotation axis (7) between a maximum opening position and a closing position of the feeding pipe (4); the throttle small plate (5) presents a curvature, which increases from the centre of the throttle small plate (5) to the external edge (34) of the throttle small plate (5), has a minimum zero value in the centre of the throttle small plate (5) and a maximum value comprised between 0.02 and 0.06 at the external edge (34) of the throttle small plate (5).

## Description

### TECHNICAL FIELD

The present invention relates to a throttle valve for an internal combustion engine.

### BACKGROUND ART

A throttle valve, which is arranged upstream of an intake manifold and adjusts the flow rate of the air which is fed to the cylinders, is contemplated in gasoline-fed internal combustion engines. A typical currently marketed throttle valve presents a valve body provided with a tubular feeding pipe through which the air sucked by the internal combustion engine flows; a throttle small plate, which is keyed onto a rotating shaft to rotate between an opening position and a closing position of the feeding pipe, is accommodated inside the feeding pipe. The rotation of the throttle small plate is controlled by an actuator device generally comprising an electric motor coupled to the throttle small plate shaft by means of a gear transmission and at least one spring which pushes the throttle small plate shaft towards the closing position (or better towards the limp-home position next to the closing position).

The presence of the throttle small plate along the feeding pipe is however an obstacle to the flow of intake air and thus inevitably determines non-negligible load losses. Furthermore, the rotation of the throttle small plate for closing the feeding pipe (i.e. for decreasing the usable conduction section of the feeding pipe) takes place against the push of the intake air which flows along the feeding pipe and it is thus necessary to size the actuator device so as to easily overcome the push of the intake air which flows along the feeding pipe.

### DISCLOSURE OF INVENTION

It is the object of the present invention to make a throttle valve for an internal combustion engine, which throttle valve presents a reduced load loss along the feeding pipe thereof and, at the same time, is easy and cost effective to manufacture.

According to the present invention, a throttle valve for an internal combustion engine is made as recited in the appended claims.

### BRIEF DESCRIPTION OF THE DRAWINGS

The present invention will now be described with reference to the accompanying drawings, which illustrate a non-limitative embodiment thereof, in which:
- figure 1 is a partially exploded perspective view, with parts removed for clarity, of a throttle valve made according to the present invention;
- figure 2 is a front view with parts removed for clarity of the throttle valve in figure 1;
- figure 3 is a perspective view of a throttle small plate of the throttle valve in figure 1;
- figure 4 is a further perspective view of the throttle small plate in figure 3;
- figure 5 is a side view of the throttle small plate in figure 3;
- figure 6 is a perspective view of a different embodiment of a throttle small plate of the throttle valve in figure 1; and
- figure 7 is a side view of the throttle small plate in figure 6; and
- figure 8 is a side section view of the throttle small plate in figure 6.

### PREFERRED EMBODIMENTS OF THE INVENTION

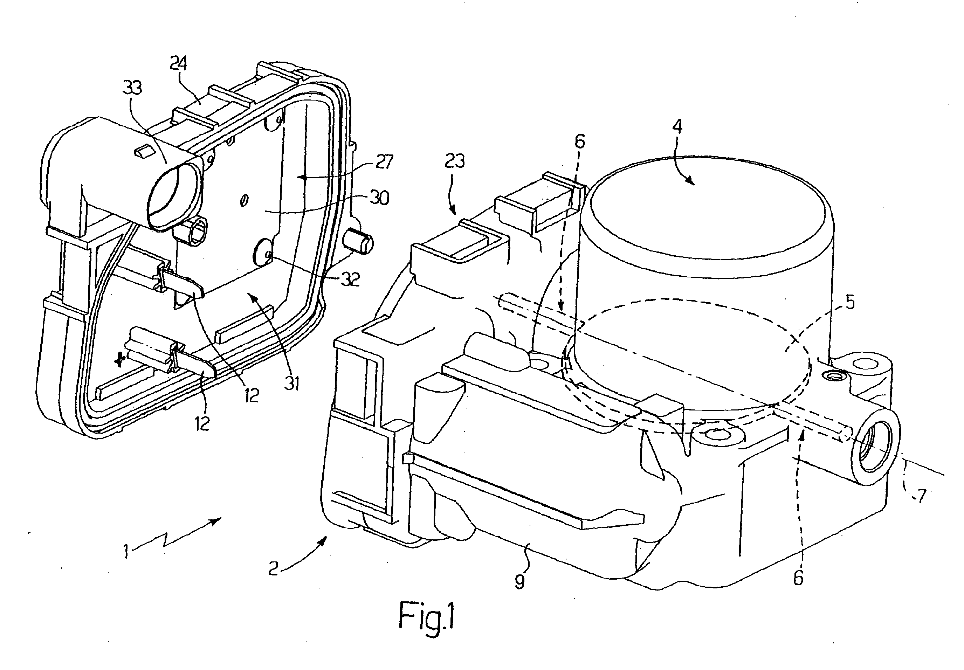

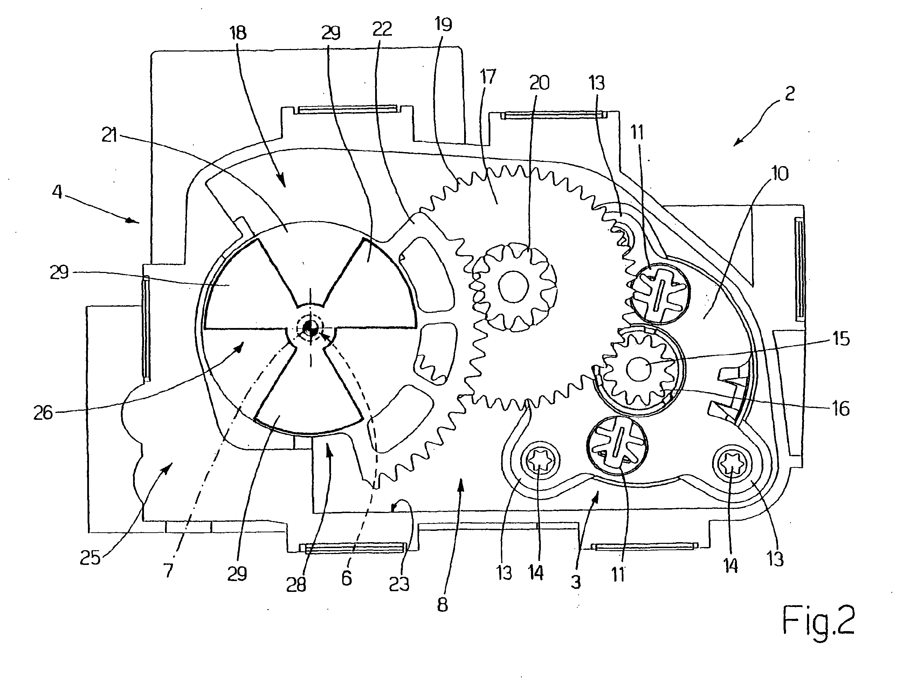

In figure 1, numeral 1 indicates as a whole an electronically controlled throttle valve for an internal combustion engine (not shown). The throttle valve 1 comprises a valve body 2 accommodating an electric motor 3 (shown in figure 2), a tubular feeding pipe 4 of circular section through which the air sucked by the internal combustion engine flows, and a throttle small plate 5 (diagrammatically shown with a broken line), which is circular shaped, engages the feeding pipe 4 and rotates between an opening position and a closing position of the feeding pipe 4 by effect of the action of an actuator device. The throttle small plate 5 is keyed onto a shaft 6 presenting a longitudinal rotation axis 7 to rotate between the opening position and the closing position by effect of the action of the actuator device.

As shown in figure 2, the actuator device comprises the electric motor 3 which is coupled to the shaft 6 itself by means of a gear transmission 8, a return spring (not shown and coupled to the shaft 6) adapted to rotate the throttle valve 5 towards the closing position, and a contrast spring (not shown and coupled to the shaft 6) adapted to rotate the throttle small plate 5 towards a partial opening position or limp-home position defined by a bearing body (not shown) against the bias of the return spring.

The electric motor 3 presents a cylindrical body, which is arranged in a tubular housing 9 (shown in figure 1) arranged by the side of the feeding pipe 4 and is held in a determined position inside the tubular housing 9 by a metal plate 10; the metal plate 10 presents a pair of female electric connectors 11, which are electrically connected to the electric motor 3 and are adapted to be engaged by a pair of corresponding male electric connectors 12 (shown in figure 1). In order to ensure a correct fastening of the electric motor 3 to the valve body 2, the plate 10 presents three perforated radial protrusions 13, through which the corresponding fastening screws 14 are inserted into the valve body 2.

The electric motor 3 presents a shaft 15 ending with a toothed wheel 16, which is mechanically connected to the shaft 6 by means of an idle toothed wheel 17 interposed between the toothed wheel 16 and an end gear 18 keyed onto the shaft 6. The toothed wheel 17 presents a first set of teeth 19 coupled to the toothed wheel 16 and a second set of teeth 20 coupled to the end gear 18; the diameter of the first set of teeth 19 is different from the diameter of the second set of teeth 20, and thus the toothed wheel 17 determines a non-unitary transmission ratio. The end gear 18 is defined by a solid central cylindrical body 21 keyed onto the shaft 6 and provided with a circular crown portion 22 provided with a series of teeth coupled to the toothed wheel 17.

The gear transmission 8 and the plate 10 are arranged in a chamber 23 of the valve body 2, which is closed by a removable lid 24 (shown in figure 1).

As shown in figures 1 and 2, the throttle valve 1 comprises an inductive position sensor of the "contactless" type, which is coupled to the shaft 6 and adapted to detect the angular position of the shaft 6 and, thus, of the throttle small plate 5 to allow a feedback control of the position of the throttle small plate 5 itself. The position sensor 25 is of the type described in patent US6236199B1 and comprises a rotor 26 integral with the shaft 6 and a stator 27 supported by the lid 24 and arranged facing the rotor 26 in use; the rotor 26 is defined by a flat metal coil 28, which is closed in short-circuit, presents a series of lobes 29, and is incorporated in the central cylindrical body 21 of the end gear 18. The stator 27 of the position sensor 25 comprises a header 30, which is connected to an internal wall 31 of the lid 24 by means of four plastic rivets 32.

As shown in figure 1, the lid 24 is provided with a female electric connector 33, which comprises a series of electric contacts (not shown in detail): two electric contacts are connected to the male electric connectors 12 adapted to supply the electric motor 3, while the other electric contacts are connected to the stator 27 of the position sensor 25; when the lid 24 is arranged in contact with the valve body 2 to close the chamber 23, the female electric connector 33 is arranged over the tubular housing 9 of the electric motor 3.

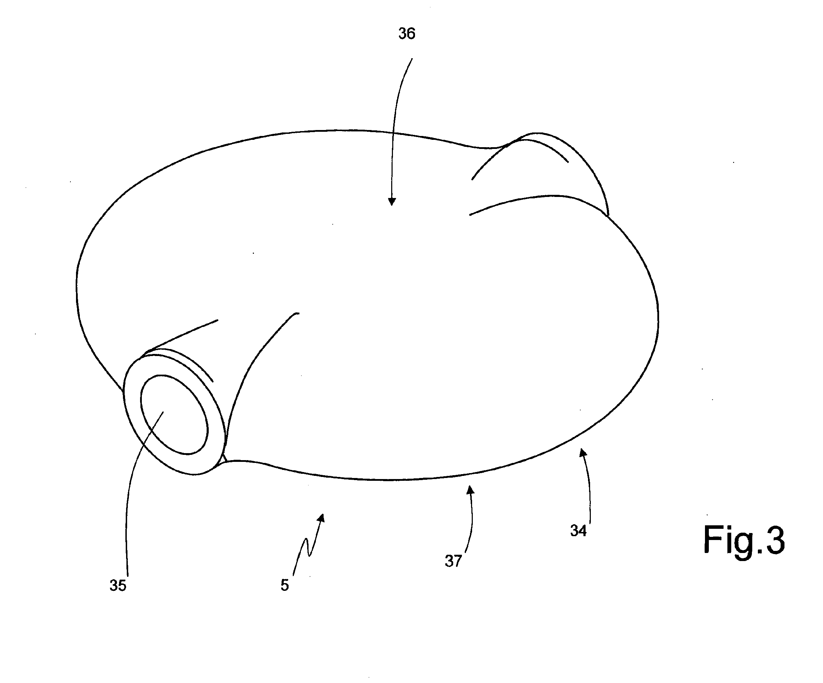

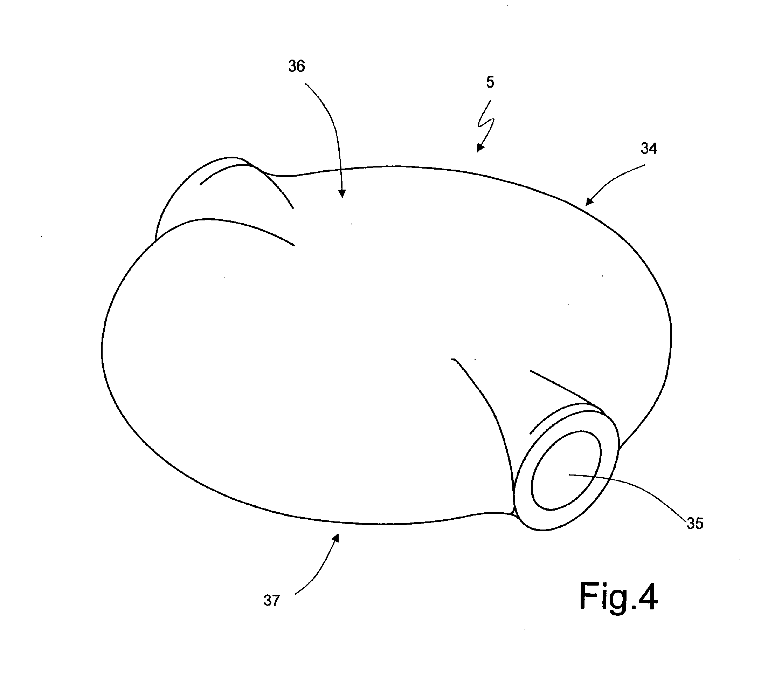

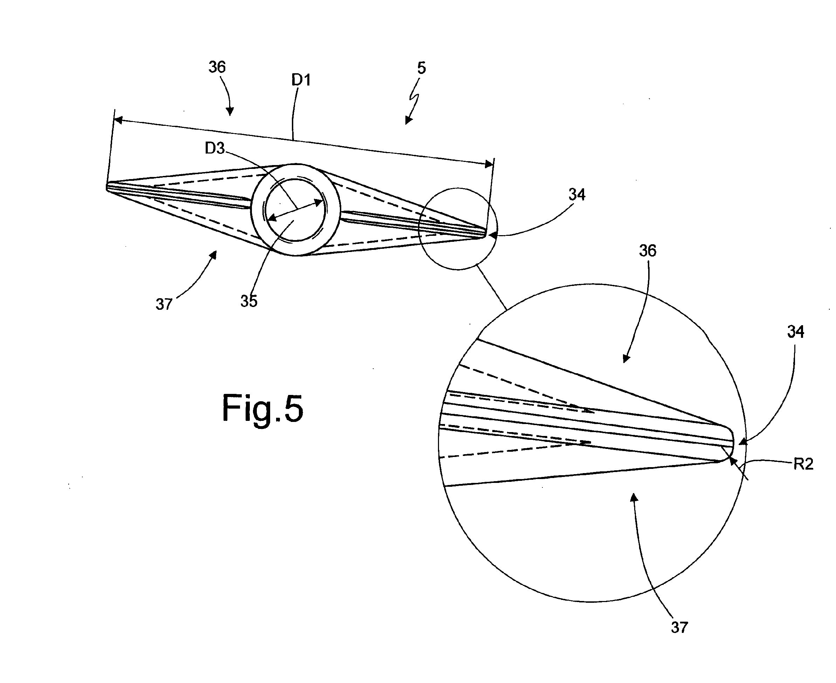

As shown in figures 3, 4 and 5, the throttle small plate 5 presents a rounded shape, i.e. presents a curvature, which increases from the centre of the throttle small plate 5 to the external edge 34 of the throttle small plate 5, has a minimum zero value in the centre of the throttle small plate 5 and a maximum value of 0.04 at the external edge 34 of the throttle small plate 5. More in general, the curvature of the throttle small plate 5 at the external edge 34 presents a maximum value included between 0.02 and 0.06.

According to a preferred embodiment, the external edge 34 of the throttle small plate 5 presents a rounded shape; furthermore, the ratio between the diameter D1 of the throttle small plate 5 and the curvature radius R2 of the external edge 34 of the throttle small plate 5 is comprised between 56 and 120.

As previously mentioned, the throttle small plate 5 is supported by the shaft 6, which is rotationally mounted about the rotation axis 7; to accommodate the shaft 6, the throttle small plate 5 centrally presents a through housing hole 35 of circular section, which is adapted to accommodate the shaft 6. Preferably, the ratio between the diameter D1 of the throttle small plate 5 and the diameter D3 of the housing hole 35 is comprised between 5 and 6.5.

According to the embodiment shown in the accompanying figures, the throttle small plate 5 is made of molded plastic material and presents a minimum thickness of 2 mm.

The throttle small plate 5 presents a front surface 36 which is struck by a flow of air in the closing position and a rear surface 37 opposite to the front surface 36 (and which is thus isolated from the air flow in the closing position).

According to the embodiment shown in figures 3, 4 and 5, the front surface 36 of the throttle small plate 5 presents a concave shape. On the other hand, according to a different embodiment (not shown), the front surface 36 of the throttle small plate 5 presents one half having a concave shape and a another half having a convex shape.

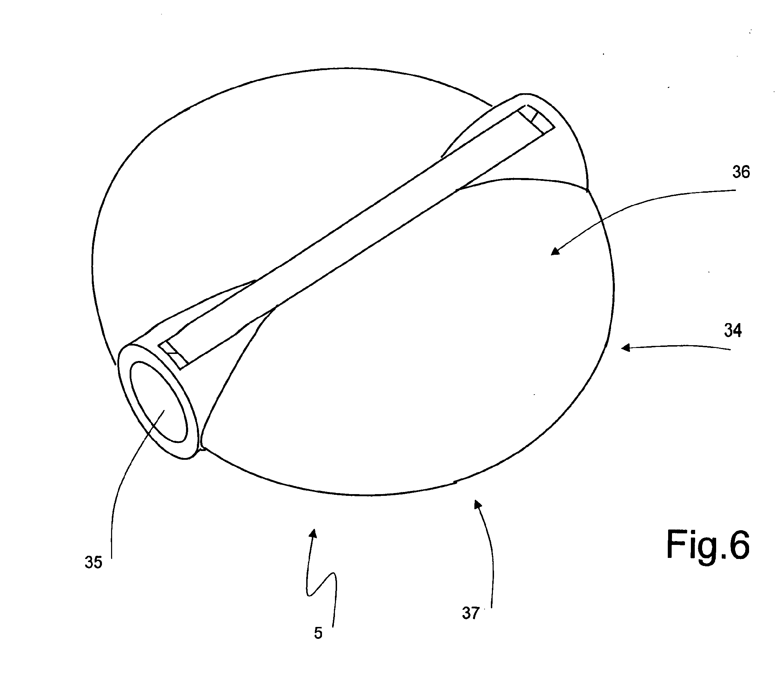

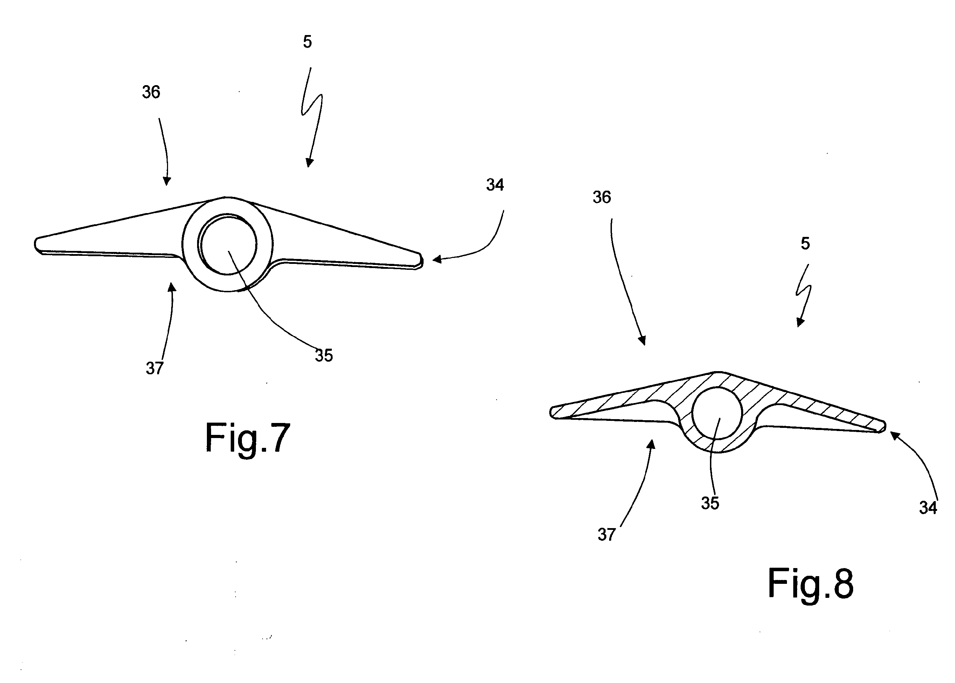

Figures 6, 7 and 8 show a different embodiment of the throttle small plate 5 which differs from the embodiment shown in figures 3, 4 and 5 for the conformation of the front surface 36 of the throttle small plate 5.

The above-described throttle valve 1 presents several advantages, because it is simple and cost-effective to make and above all presents considerably lower load losses due to the throttle small plate 5 than a standard throttle valve. Consequently, the above-described throttle valve 1 presents a high air intake energy efficiency; furthermore, the rotation of the throttle small plate 5 for closing the feeding pipe 4 (i.e. for decreasing the usable conduction section of the feeding pipe 4) requires less force than a standard throttle valve and thus the actuator device of the throttle valve 1 is sized to develop a lower force than an actuator device of a standard throttle valve with evident benefits in terms of response promptness (by effect of the lower mechanical and fluid-dynamic inertias), energy saving and containment of weight and of electric energy consumption.

## Claims

1. A throttle valve (1) for an internal combustion engine and comprising:
a valve body (2);
a tubular feeding pipe (4) of circular section defined in the valve body (2) and through which the air sucked by the internal combustion engine flows; and
a throttle small plate (5), which is circular shaped, is arranged inside the feeding pipe (4) and rotates about a rotation axis (7) between a maximum opening position and a closing position of the feeding pipe (4);
the throttle valve (1) **is characterized in that** the throttle small plate (5) presents a curvature, which increases from the centre of the throttle small plate (5) to the external edge (34) of the throttle small plate (5), has a minimum zero value in the centre of the throttle small plate (5) and a maximum value comprised between 0.02 and 0.06 at the external edge (34) of the throttle small plate (5).

2. A throttle valve (1) according to claim 1, wherein the throttle small plate (5) presents a curvature, which has a minimum zero value in the centre of the throttle small plate (5) and a maximum value of 0.04 at the external edge (34) of the throttle small plate (5).

3. A throttle valve (1) according to claim 1 or 2, wherein the external edge (34) of the throttle small plate (5) presents a rounded shape; the ratio between the diameter (D1) of the throttle small plate (5) and the curvature radius (R2) of the external edge (34) of the throttle small plate (5) is comprised between 56 and 120.

4. A throttle valve (1) according to claim 1, 2 or 3 and comprising a shaft (6), which is rotationally mounted about the rotation axis (7) and supports the throttle small plate (5); the throttle small plate (5) centrally presents a through housing hole (35) of circular section, which is adapted to accommodate the shaft (6).

5. A throttle valve (1) according to claim 4, wherein the ratio between the diameter (D1) of the throttle small plate (5) and the diameter (D3) of the accommodation hole (35) is comprised between 5 and 6.5.

6. A throttle valve (1) according to one of the claims from 1 to 5, wherein the throttle small plate (5) presents a minimum thickness of 2 mm.

7. A throttle valve (1) according to one of the claims from 1 to 6, wherein the throttle small plate (5) presents a front surface (36) which is struck by a flow of air in the closing position and which presents a concave shape.

8. A throttle valve (1) according to one of the claims from 1 to 6, wherein the throttle small plate (5) presents a front surface (36) which is struck by a flow of air in the closing position and presents one half having a concave shape and another half having a convex shape.

9. A throttle valve (1) according to one of the claims from 1 and 8 and comprising an actuator device, which controls the rotation of the throttle small plate (5) about the rotation axis (7) and comprises an electric motor (3) coupled to the throttle small plate (5) by means of a gear transmission (8) and at least one spring which pushes the throttle small plate (5) towards a partial opening or limp-home position next to the closing position.

10. A throttle valve (1) according to claim 9, wherein the actuator device comprises a return spring adapted to rotate the throttle small plate (5) towards the closing position, and a contrast spring adapted to rotate the throttle small plate (5) towards a partial opening or limp-home position defined by a bearing body against the bias of the return spring.
